(19) **Europäisches Patentamt / European Patent Office / Office européen des brevets**

(11) **EP 1 595 203 B1**

(12) **EUROPEAN PATENT SPECIFICATION**

(45) Date of publication and mention
of the grant of the patent:
**19.01.2011 Bulletin 2011/03**

(21) Application number: **04712981.2**

(22) Date of filing: **20.02.2004**

(51) Int Cl.:
*G06F 1/26* (2006.01)   *H02J 7/00* (2006.01)

(86) International application number:
**PCT/CA2004/000248**

(87) International publication number:
**WO 2004/075039 (02.09.2004 Gazette 2004/36)**

(54) **CIRCUIT AND METHOD OF OPERATION FOR AN ADAPTIVE CHARGE RATE POWER SUPPLY**

SCHALTUNG UND VERFAHREN ZUM BETRIEB FÜR EIN NETZTEIL MIT ADAPTIVER LADEGESCHWINDIGKEIT

CIRCUIT ET PROCEDE DE FONCTIONNEMENT D'UNE ALIMENTATION ELECTRIQUE A VITESSE DE CHARGE ADAPTATIVE

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **21.02.2003 US 372446**
**21.02.2003 CA 2419497**

(43) Date of publication of application:
**16.11.2005 Bulletin 2005/46**

(60) Divisional application:
**10181666.8 / 2 264 855**

(73) Proprietor: **RESEARCH IN MOTION LIMITED**
**Waterloo, Ontario N2L 3W8 (CA)**

(72) Inventors:
- **VESELIC, Dusan**
  **Oakville, Ontario L6M 3N7 (CA)**
- **HABICHER, Machael, F.**
  **Waterloo, Ontario N2L 6B9 (CA)**
- **IDZIK, Jacek, S.**
  **Kenilworth, Ontario N0G 2E0 (CA)**
- **MALTON, Jonathan, T.**
  **Kitchener, Ontario N2M 5C1 (CA)**

(74) Representative: **Hibbert, Juliet Jane Grace et al**
**Kilburn & Strode LLP**
**20 Red Lion Street**
**London WC1R 4PJ (GB)**

(56) References cited:
US-A- 5 723 970   US-A1- 2002 130 638
US-B1- 6 507 173   US-B1- 6 522 118

- **"Linear Li-Ion Charger with termination in ThinSOT" LTC4056-4.2 LINEAR LI-ION CHAGER WITH TERMINATION IN THINSOT, [Online] April 2003 (2003-04), pages 1-16, XP002279448 USA Retrieved from the Internet: URL: www.linear.com/pdf/405642f.pdf> [retrieved on 2004-05-10]**
- **"LTC 4053-4.2 USB Compatible Lithium-Ion Battery Charger with thermal Regulation" USB COMPATIBLE LITHIUM-ION BATTERY CHARGER WITH THERMAL REGULATION, [Online] 2001, page 1-16, XP002282651 USA Retrieved from the Internet: URL:http://www.linear.com/pdf/4053f.pdf> [retrieved on 2004-05-28]**

**Description**

**TECHNICAL FIELD**

This invention relates in general to battery chargers, and more specifically to a method and apparatus for charging a battery in a portable communication device from a variety of power sources, including limited capacity sources such as an integral power node of a computer data bus. One such computer data bus would be a USB (universal serial bus) port.

**BACKGOUND ART**

With the current computing and information revolution, portable electronic devices such as cellular telephones, personal digital assistants (PDAs), digital pagers and wireless email devices, are becoming very common.

These portable devices are typically powered by internal batteries which must be recharged periodically by an external power source, using a battery charger. Battery chargers generally receive power from a standard AC electrical outlet and convert the AC power into a low DC voltage for recharging a battery.

The battery chargers of these portable devices also generally employ a "battery charge controller" to manage the charging of the battery. Such battery charge controllers offer functionality such as:

- regulating the voltage and current levels to the rechargeable battery;
- providing status signals to the main processor of the portable device, or operating one or more status LEDs (light emitting diodes);
- providing protection circuits such as overcurrent, undervoltage, and overtemperature protection; and
- shutting themselves off when the charging source has been removed, to minimize battery drain.

Unfortunately, most of these battery charge controllers are designed to draw from a high capacity power supply with a steady voltage that will not sag appreciably under its current demands. This is a problem when one attempts to use a power supply with limited capacity or when the power is delivered via unknown length and gauge of power wires (the resistance of such power wires cause a voltage drop which aggravates the problem). Some computer data buses such as USB (universal serial bus) buses can be used to provide power to external devices, but while such power supplies are very convenient, they have limited capacity and are delivered via standard USB cables whose power wires could vary in length and gauge (anywhere from 20AWG - 28AWG, for example).

The majority of personal computers (PCs) and laptop computers available today, are provided with one or more USB ports as standard components. USB ports are designed to support data communication at speeds of 12 megabits and 1.5 megabits per second (USB 2.0 provides for up to 480 megabits per second), support PnP (Plug and Play) installation software, and support hot plugging (i.e. devices can be connected and disconnected while the PC is running). Thus, USB ports are often used as interfaces to connect keyboards, mouses, game controllers, printers and scanners to PCs.

As well, USB ports are able to supply limited power to a connected device. The standard USB specification requires that "high-power" USB ports be operable to provide a supply voltage of 4.75 - 5.25 VDC and supply a maximum current of at least 500mA (five units). The specification for "low-power" USB ports requires a supply voltage of 4.40 - 5.25 VDC and current of 100 mA (one unit).

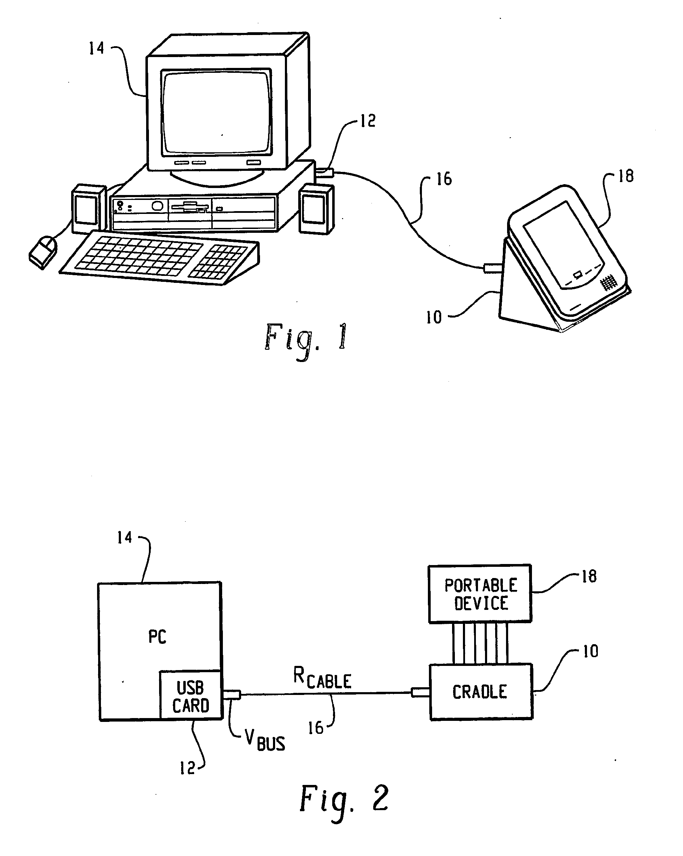

USB ports would seem to be a very logical choice as a power supply for portable devices for a number of reasons. To begin with, USB ports supply a low DC voltage supply which is often very close to, or just above, the voltage of the battery being charged (many portable devices having battery voltages in the range of 2.5 - 4.5 VDC). As well, many portable devices may be operable to upload and download data or software, to and from a personal computer or a laptop computer (often referred to as "syncing"). Thus, many portable devices are supplied with docking cradles as shown in the system diagram of **Figure 1.** This is quite a straightforward system, as the docking cradle **10** is connected to a USB port **12** of a personal computer (PC) **14,** via a simple USB cable and connectors **16.** The mobile device **18** need only be placed into the docking cradle **10** and an electronic connection to the (PC) **14,** is made.

If the USB port **12** has sufficient power, it makes much more sense to use the USB port **12** to supply charging power to the mobile device **18,** rather than using a separate AC charger. For example:

- a USB power supply will have less electrical noise than an AC charger, unless the AC charger incorporates large DC capacitors or inductors;
- an AC charger requires either a heavy transformer or an expensive switching power supply current, neither of which would be required if USB power is used;
- in the USB power supply implementation, the cable and connectors **16** used to connect the docking cradle **10** to the PC **14** could be used to carry both power and data, so no extra physical components would be required at all. In contrast, an AC power supply would have to be provided as a separate physical component, and

• there are no universal standards for ARC power supplies ; a given AC power supply may require 120VAC or 240VAC as an input, and may provide 3, 4.5 ,6, 7.5 or VDC out, with one of large number of different possible connectors and polarities.

A traveller who forgets an AC power supply at home, may not be able to find a replacement.

In contrast, the USB standard is widely accepted, so that a traveller whose mobile device is equipped with a USB connector will have a much greater chance of fmding a charging source.

Unfortunately, USB ports can only provide limited power, while typical battery charge controllers are designed to receive a steady, high capacity power supply (that is, the input voltage at the battery charge controller is at or near its designed value, and does not drop as charging current increases). The problem becomes clear when considering the block diagram of Figure 2. The components of Figure 2 are the same as those of Figure 1, specifically, a docking cradle 10 powered from a USB port 12 of a PC 14, via cable and connectors 16, and feeding a portable device 18 resting in the cradle 10. From this presentation, it is clear that the voltage output from the USB port 12, $V_{USB}$, will drop as it crosses the cable and connectors 16, due to its resistance $R_{CABLE}$. If either the cable resistance ($R_{CABLE}$) or the current drawn ($I_{CABLE}$) is too great, the voltage arriving at the battery charge controller in the mobile device 18 may be too low. This low voltage will cause many standard battery charge controllers either to shut down or to oscillate and fail to charge the battery in the portable device 18 efficiently, US 5723970 discloses a battery charging circuit having supply current regulation wherein the charging circuit monitors an output current or other parameter of the power source output. US 6507173 B 1 discloses a single chip power management unit apparatus and method.

True, new dedicated battery charge controllers could be developed which are operable with the limited USB power supply and resistance of the cable and connector system, but that would be an expensive and complicated solution. Such a design would become even more complicated to be compatible with both computer data bus power supplies and other power sources, such as AC power supplies.

There is therefore a need for a method and apparatus which allows standard battery charge controllers to be supplied with power from standard computer data busses such as USB ports. This design must be provided with consideration for the cost of electrical components, the limited physical board area in portable devices, the reliability and the complexity of the design. It is also desirable that this method and apparatus be operable with both computer data bus power supplies, and other power sources such as AC power supplies.

DISCLOSURE OF THE INVENTION

It is therefore an object of the invention to provide a novel method and apparatus which allows standard battery charge controllers to be supplied from standard computer data ports and other power sources, which obviates or mitigates at least one of the disadvantages of the prior art.

One aspect of the invention is broadly defined as a battery charging circuit which adjusts to the parameters of an external power supply, to minimize charge time, comprising: a battery charge controller connected to the external power supply and electrifying a battery; and a regulating circuit for controlling the current drawn by the battery charge controller to maintain the current at a magnitude below a given value, the given value of current corresponding to a magnitude of current that produces a voltage at an input to said battery charge controller that corresponds to a low voltage shut off level for the battery charge controller.

Another aspect of the invention is broadly defined as a method for charging a battery of a portable device via an external power supply, which adjusts to the parameters of the external power supply to minimize charge time, the method comprising the steps of: connecting a battery charge controller to the external power supply and to a rechargeable battery in the portable device; determining a low voltage shut off level for the battery charge controller ; monitoring the voltage that the external power supply provides to the battery charge controller; and controlling the current drawn by the battery charge controller to maintain the current at a magnitude below a given value, the given value of current corresponding to a magnitude of current that produces a voltage at an input to said battery charge controller that corresponds to the low voltage shut off level for the battery charge controller.

BRIER DESCRIPTION OF THE DRAWING

These and other features of the invention will become more apparent from the following description in which reference is made to the appended drawings in which:

Figure 1 presents a physical layout of a personal computer connected to a portable electronic device in a manner known in the art;

Figure 2 presents a block diagram of the system presented in Figure 1, highlighting the problem of voltage drop between the personal computer and the portable electronic device;

Figure 3 presents an electrical schematic diagram of a battery charging circuit in a broad embodiment of the invention;

Figure 4 presents an electrical schematic diagram of a battery charging circuit using a comparator, in an embodiment of the invention;

Figure 5 presents an electrical schematic diagram of a battery charging circuit using an electronic potentiometer, in an embodiment of the invention;

**Figure 6** presents a timing diagram of charging current provided by the embodiment of **Figure 5;** and

**Figure 7** presents an electrical schematic diagram of a battery charge circuit in an embodiment of the invention.

## BEST MODE FOR CARRYING OUT THE INVENTION

The general problem addressed by the invention is that typical battery charge controllers are designed to receive a steady, high capacity power supply while such a power supply is often unavailable, or is simply inconvenient. One of the most common battery charge controllers, for example, the LTC1734 from Linear Technology is designed to receive 5 VDC in, and has a low voltage lockout at 4.53V (that is, if the LTC1734 receives a supply voltage of less than 4.53VDC, it simply shuts down). When the voltage drop across the supply cable and connectors **16** are considered, the voltage supplied by the power node of a data bus such as a USB port, may be lower than this low voltage lockout. Therefore, though the LTC1734 is widely available, inexpensive and reliable, it cannot be used effectively in this environment.

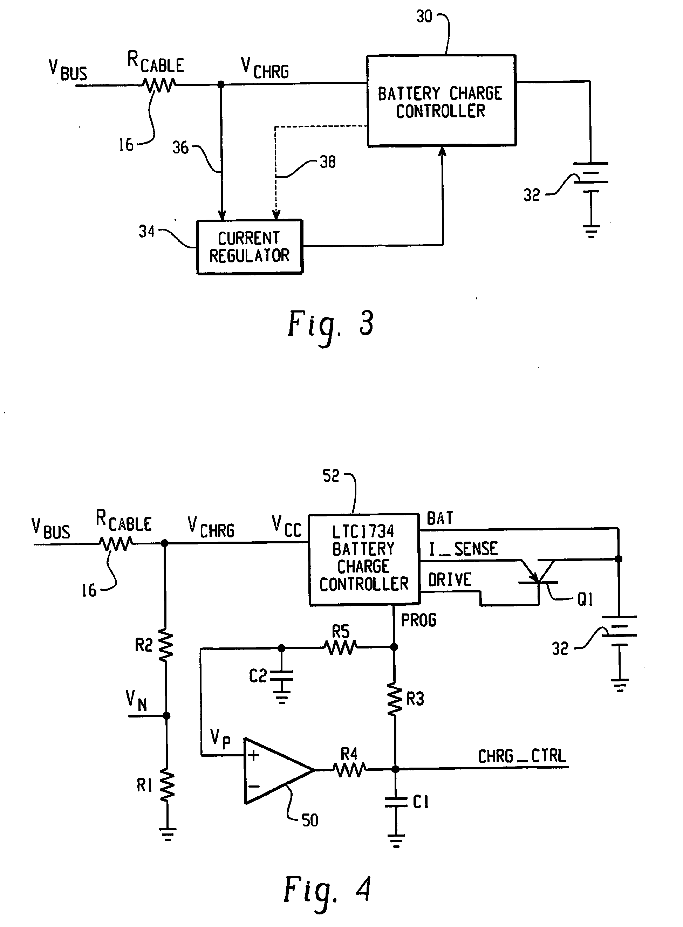

A circuit which overcomes this problem, is presented as a block diagram in **Figure** 3. This figure presents a battery charging circuit which uses a standard battery charge controller **30** known in the art, coupled to a rechargeable battery or batteries **32.** The battery charge controller **30** is provided with power from some manner of external power, such as a computer data bus. This power connection is presented in **Figure 3** in the form of input voltage $V_{BUS}$. This $V_{BUS}$ voltage will be reduced due to the resistance of the electrical cable and connectors **16,** $R_{CABLE}$. Thus, the battery charge controller **30** only receives a voltage of $V_{CHRG} = V_{BUS} - (R_{CABLE} \times I_{CABLE})$.

As will be explained in greater detail hereinafter, the voltage drop across $R_{CABLE}$ may result in the $V_{CHRG}$ voltage being lower than the low voltage threshold for the battery charge controller **30.** The invention therefore adds a current regulator **34** to the circuit. The resistance $R_{CABLE}$ is of course fixed, but by reducing the current drawn by the battery charge controller **30,** $I_{CABLE}$, the voltage drop across $R_{CABLE}$ will decrease, thus avoiding the low voltage shut off of the battery charge controller **30,** and allowing the battery **32** to be charged.

A number of current regulators **34** are described herein, but in general it desirable that the current regulator:

- maximize the current being fed to the battery **32,** and therefore maximizing the current drawn from the power supply ($I_{CABLE}$), while
- keeping the $V_{CHRG}$ voltage greater than the low voltage shut off level of the battery charge controller **30.**

In some embodiments of the invention the current regulator **34** uses $V_{CHRG}$ as an input (via connection **36),** while in other embodiments the current regulator **34** uses an output of the battery charge controller **30** (via connector **38).** Still other embodiments use no feedback to the current regulator **34.**

Say, for example, that the voltage provided from the computer data bus is 4.75 - 5.25 VDC; that is, $V_{BUS}$ = 4.75 - 5.25 VDC; the circuit must therefore be designed to operate at $V_{BUS}$ = 4.75 VDC. Suppose also that the resistance of the cable and connectors **16** is 0.5 ohms ($R_{CABLE}$ = 0.5 ohms) and that the low voltage shut off of the battery charge controller **30** is 4.53 VDC. The battery charge controller **30** will endeavour to draw as much current as needed to charge the battery **32,** which, in the case of a USB bus, will be limited to about 0.5 A. Thus, the voltage arriving at the battery charge controller, $V_{CHRG}$, will be:

$$V_{CHRG} = V_{BUS} - R_{CABLE} \times I_{CABLE} \qquad (1)$$
$$= 4.75\ VDC - (0.5\ ohms \times 0.5\ A)$$
$$= 4.5\ VDC$$

If the low voltage shutdown of the battery charge controller is higher than $V_{CHRG}$ = 4.5 VDC, it will therefore shutdown. This is the case for the LTC1734 controller, for example, which shuts down at 4.53 VDC.

The above calculations did not even take into account component tolerances, which cannot be ignored. The LTC1734 application notes state that this device has a tolerance of 1%. If the current regulator **34** incorporates a number of simple components then the circuit of **Figure 3** may easily have a tolerance of 3% or so. Thus, $V_{CHRG}$ may effectively be in the range of 4.37 VDC; well below the 4.53 VDC cut off for the LTC1734 battery charge controller.

Equation (1) can also be used to determine a current level, $I_{CABLE}$, which does not cause the battery charge controller **30** to shutdown:

$$V_{CHRG} = V_{BUS} - R_{CABLE} \times I_{CABLE} \qquad (1)$$

$$I_{CABLE} = (V_{BUS} - V_{CHRG}) / R_{CABLE} \qquad (2)$$
$$= (4.75 - 4.53) / 0.5$$
$$= 0.44 \text{ A}$$

Thus, reducing the current $I_{CABLE}$ to 0.44 A is sufficient to avoid the low voltage shut off of the battery charge controller **30**. Allowing for 3% tolerance:

$$I_{CABLE} = (V_{BUS} - V_{CHRG} \times 3\%) / R_{CABLE} \qquad (2)$$
$$= (4.75 - 4.53 \times 1.03) / 0.5$$

$$= (0.09) / 0.5$$
$$= 0.18 \text{ A}$$

That is, the current $I_{CABLE}$ may have to be reduced to 0.18 A to avoid the low voltage shutdown.

Thus, the use of the circuit in **Figure 3** allows computer data buses and similar power supplies with limited capacity, to be used to charge mobile devices, without causing the battery charge controller **30** to shut down.

The solution of this embodiment adapts to the capabilities of any external power source to minimize charge time. If, for example, 5 VDC arrives at the input of the battery charge controller **30** with unlimited current and no voltage drop as the current draw increases, then the regulating circuit **34** will not restrict the current drawn.

A number of different embodiments will now be described. Each embodiment uses a very small number of simple, reliable components. Thus, as a whole, the invention provides an effective solution which is inexpensive, reliable and consumes minimal board space in a portable device.

**Comparator Embodiment**

**Figure 4** presents an electrical schematic diagram charging circuit which employs two main components: a comparator **50** and a LTC1734 battery charge controller **52** having a current control pin PROG. Varying the current drawn through the control pin PROG will vary the current supplied by the LTC1734 battery charge controller 52 to the battery **32.** Drawing more current out of the PROG pin will increase the charge current, while reducing the PROG current will reduce the charge current.

Many battery charge controllers have a similar current control system, but this embodiment will be described with respect to the LTC1734 controller. The LTC1734 controller can be operated in either constant current mode, or constant voltage mode.

In the constant voltage mode (entered when the charge voltage of the battery **32** reaches 4.2 VDC externally), the LTC1734 controller **52** servos its DRIVE pin to maintain its BAT pin at 4.2 VDC. In this mode, the current provided by the LTC1734 controller **52** will necessarily drop, and the current flowing out of the PROG pin will drop accordingly. As this latter mode of operation is not affected by the system described herein, it will not be discussed in any further detail.

As noted above, the minimum required voltage at VCC for proper operation of the LTC1734 controller **52** is 4.53 VDC, and the USB specification states that for standard USB equipment under a high load (i.e. 500mA), $V_{CHRG}$ may be pulled as low as 4.35V - too low for the LTC1734 controller **52** to operate. To prevent this, the comparator **50** monitors $V_{CHRG}$ (scaled down to a more useful voltage - $V_N$ - by the voltage divider R1 and R2) fed to the inverting input of the comparator **50** and compares it to a reference voltage ($V_P$) which is fed to the comparator **50**'s non- inverting input.

$V_P$ is derived by low-pass filtering the LTC1734 controller **52**'s PROG pin output through resistor R5 and capacitor C2, as $V_{PROG}$ =1.5 VDC when the LTC1734 controller **52** is operating in the constant-current mode. R5 also serves to isolate other components from the LTC1734 controller **52,** ensuring proper operation of the LTC1734 controller **52.** Resistors R1 and R2 are chosen such that $V_{CHRG}$ is a suitable tolerance above 4.53 VDC when $V_N$ = 1.5 VDC.

In the intended and published usage of the LTC1734 controller **52,** the voltage across resistor R3 is simply $V_{PROG}$ since R3 is intended to be tied between PROG and ground. In such a configuration, determining and setting a fixed charge current $I_{CHRG}$, is straightforward. In the system of the invention, rather than adjusting R3 to control charge current as most alternative ideas suggest, this circuit adjusts the voltage across a fixed R3 by changing the voltage across C1 (that is, $V_{C1}$) such that:

$$I_{CHG} = \frac{1.5V - V_{C1}}{R3} \times 1000$$

(3)

$V_{C1}$ is controlled by the comparator **50.** As the comparator **50** is an open- drain comparator (a MAX9120 comparator was used for testing purposes, though similar parts such as the LMV7235 should work as well), when $V_N >$ $V_P$, the comparator **50** will sink current into its output pin; otherwise the output pin will float.

The control loop operates as follows:

1. as $I_{CHRG}$ drops, the voltage drop across the cable and connectors **16** also drops, so $V_{CHRG}$ rises, per equation (1) above. As $V_{CHRG}$ rises, the positive input to the comparator **50,** $V_N$, will also rise. For $V_N$ rising, when $V_N > V_P$ + 0.5 $V_{HYS}$ ($V_{HYS}$ being the input hysteresis for the comparator **50**), the comparator **50** will turn on its output and pull charge out of C1, decreasing $V_{C1}$ and causing $I_{CHRG}$ to increase;

2. as $I_{CHRG}$ increases, the voltage drop across the cable and connectors **16** rises, causing $V_{CHRG}$, and consequently $V_N$, to drop. For $V_N$ falling, when $V_N < V_P$ - 0.5 $V_{HYS}$, the comparator **50** turns off its output, allowing the LTC1734 controller **52**'s PROG pin to pour charge into C1, causing $V_{C1}$ to increase and decreasing $I_{CHRG}$.

Resistor R4 smooths out the ripples on C1 and limits current transients through the comparator **50**'s output.

When the power supply is capable of supplying all the power the LTC1734 controller **52** can handle, $V_{C1}$ will be at a minimum and $I_{CHG}$ will be approximately determined by:

$$I_{CHG} = \frac{1.5V}{R3 + R4 + R_{OUT}}$$

(4)

$R_{OUT}$ is the resistance from the comparator **50's** output to GND when the output is active. Because the LTC1734 controller **52** is susceptible to malfunction due to capacitive effects in the PROG circuit, it is best to keep R4 ≤ 0.1 R3, but this will depend on the application, and can easily be determined by one skilled in the art.

When power is first applied to this circuit through $V_{BUS}$, $V_{C1}$ = 0 and the charger will start and stay on. A high-on-reset signal of 3.0V applied to CHG_CTRL will keep the charger off; once the "off" state has been established, the CHG_CTRL signal can be removed. Conversely, pulling CHG_CTRL to GND for a period of time and then floating it will turn on the charger.

**Testing of Comparator Embodiment**

The circuit of **Figure 4** was tested with the following component values:

R1 = 10.0kΩ

R2=21.0kΩ

R3 = 3.09kΩ

R4 = 200Ω

R5=10.0Ω

C1 = 1μF

C2 = 0.1μF

The R4, C1 time constant was chosen to be at least 10 times larger than the propagation delay of the MAX9120 for stability.

For testing purposes, a 1Ω resistor was used to simulate the resistance of the supply cable and connectors **16**.

With $V_{BUS}$ = 6 VDC, $I_{CHRG}$ = 440mA.

As $V_{BUS}$ was gradually reduced, $I_{CHRG}$ remained at 440mA until $V_{BUS}$ = 5.075 VDC, at which point $I_{CHRG}$ started to drop. By the time $V_{BUS}$ = 4.71 VDC, the charge current $I_{CHRG}$, had dropped to 92mA.

Using an HP54645D oscilloscope to probe the LTC1734 controller **52**'s VCC pin showed the following:

- for $I_{CHRG}$ = 440mA and $V_{BUS}$ = 5.075 VDC, VCC = 4.63 VDC; and
- for $I_{CHRG}$ = 92mA and $V_{BUS}$ = 4.71 VDC, VCC = 4.63 VDC.

This is consistent with the chosen values of R1 and R2, using the PROG reference scheme.

With $V_{BUS}$ = 4.63 VDC, the LTC1734 controller **52** turned off and $V_{PROG}$ = 4.625 VDC.

By returning $V_{BUS}$ to 6 VDC, the LTC1734 controller **52** could be turned on again by momentarily pulling CHG_CTRL to GND. Similarly, pulling CHG_CTRL above about 2.25 VDC turned the LTC1734 controller **52** back off.

**Digital Potentiometer Embodiment**

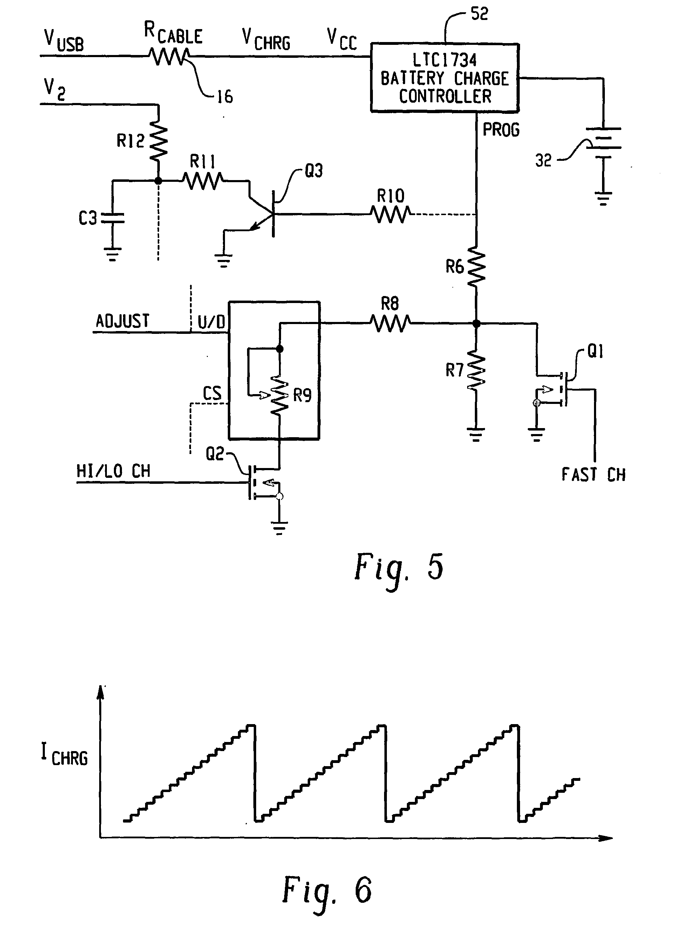

The invention is not strictly limited to the case where the low voltage threshold is never exceeded. In the embodiment of **Figures 5** and **6,** for example, the low voltage threshold could be exceeded with each periodic cycle of current ramping, but the duty cycle still be sufficient to charge the battery. The only difficulty with such a circuit is that it would be necessary to reset the battery charge controller with each cycle. The circuit of **Figures 5** and **6** ramps through a range of current supply, but uses a reset circuit to stop the ramping before the low voltage threshold is exceeded.

Like the embodiment of **Figure 4,** this circuit uses the LTC1734 battery charge controller **52,** though other battery charge controllers having a current control pin PROG could also be used. However, rather than having a comparator circuit as in **Figure 4** which modulates the current draw to avoid the low voltage shut off, this circuit ramps from a low current level, through to a high current level. Before the low voltage threshold is reached, the LTC1734 controller **52** shuts down and the cycle is repeated. The circuit also includes provisions for setting the current draw to a number of predetermined and fixed levels.

Looking first at the simplest case, with the inputs FAST CH, HI/LO CH and ADJUST all at 0 VDC, then there will be no current flow through either of the semiconductors Q2 or Q3. The resistance between PROG and ground will therefore be equal to the sum of resistors R6 and R7, and this will determine the current flow through the LTC1734 controller **52.** If these resistors are set to 2.2kohms and 16.5Kohms respectively, then the circuit will provide 100mA.

If the FAST CH is held high, then current will flow through R6, and the resistance from PROG to ground will only be 2.2kohms. Thus, the current flow through the LTC1734 controller **52** will be approximately 750mA. This setting would not be useful with a low capacity supply such as a USB port, but could be used with a high capacity supply such as an AC transformer.

Finally, with the HI/LO CH input high, current will flow through resistor R8, electronic potentiometer R9, and Q2. Resistor R8 preferably has a value of 1 kohm, and R9 is preferably a MAX5467 potentiometer, which has a range of 0 - 10kohms, in 32 discrete steps. Thus, this circuit will step through a resistance of 11kohms down to 1kohm in 32 discrete steps (note that this circuit is in parallel to R7, so R7 must be considered in determined the current drawn from PROG). This would result in the current output similar to that shown in **Figure 6** (the number of steps that would actually be made prior to reaching the low voltage shut off varies with the particular application due to component values and tolerances, and other factors).

The ADJUST and HI/LO CH inputs could be controlled using a microcontroller or similar device. As well, hardware components such as an oscillator could also be used to control the rate through which the steps of the potentiometer are stepped.

In the preferred embodiment of the invention, the HI/LO CH input also feeds the CS pin on the MAX5467. This is a "chip select" input - in combination with U/D input fed by the ADJUST input, it is used to increment or decrement the electronic potentiometer R9. Also, a separate reset circuit is provided using resistors R10, R11, R12, capacitor C3, and transistor Q3. This circuit could be powered using any reliable voltage V2 (in the preferred embodiment, V2 = +3.3 VDC, which is provided from $V_{USB}$ and a voltage regulator).

The preferred values for the components in this circuit are:

R6 = 2.2kohms

R7 = 16.5kohms

R8 = 1.0kohms

R9 = 10kohms

R10 = 200.0kohms

R11 = 10.0kohms

R12 = 200kohms

C3 = 22 pF

**Software Embodiments**

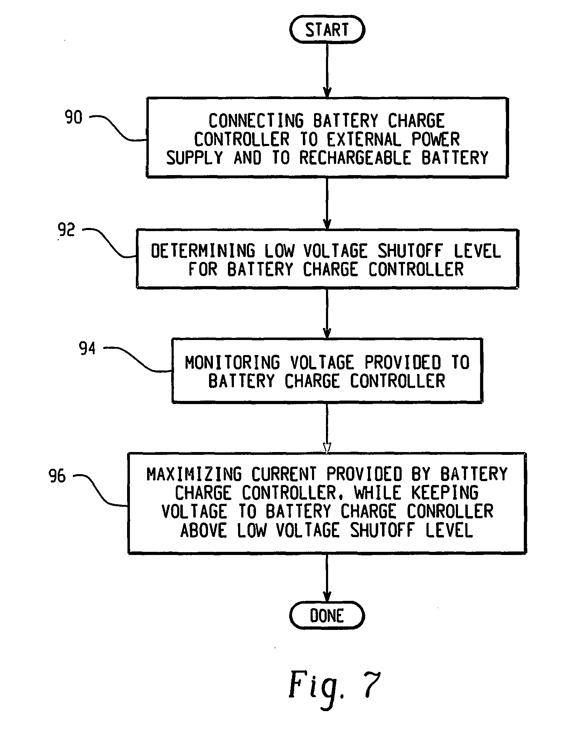

Rather than using only electronic hardware as shown above, the invention may: also be implemented using a combination a hardware and software components, including programmable devices such as digital signal processors (DSPs), microcontrollers, field programmable gate arrays (FPGAs), application specific integrated circuits (ASICs) and the like. Such an embodiment could be implemented as shown in the flow chart of **Figure 7.**

Like the embodiments described above, this method could be used to charge any rechargeable battery in a portable or similar electronic device. Any external power supply could be used, though the invention is most useful with power supplies of limited capacity. The method of the invention adjusts to the parameters of external power supplies to minimize charge time.

As shown in **Figure 7,** the method of the invention begins at step **90** by connecting a battery charge controller **30** to the external power supply and to the rechargeable battery in the portable device **18.** As described herein above, the connection to the external power supply is preferably made via a USB cable and connectors **16,** and a cradle **10** to hold the portable device **18.**

A low voltage shut off level for the battery charge controller in the portable device **18** is then determined at step **92.** This low voltage shut off level is generally predetermined as the software algorithm is executed by the portable device **18,** and the parameters of the battery charge controller **30** being used in the portable device **18** can be programmed into it.

The voltage provided by the external power supply to the battery charge controller **30** is then monitored at step **94.** This step could be provided periodically, continuously, or in response to an event, such as a change in the charge current. Various devices, such as microcontrollers, are often provided with integral ADCs (analogue to digital converters) which could be used to perform this monitoring function.

The current drawn by the battery charge controller **30** is then maximized at step **96,** with the limitation that the voltage being supplied to the battery charge controller **30** must be kept above the low voltage shut off level. The current drawn by the battery charge controller **30** could be controlled in a number of manners. For example, most microcontrollers have DAC (digital to analogue converter) outputs which could be used to control the current provided by a device such as the LTC1734 controller **52,** described herein above.

The balance of the software code needed to perform this algorithm would be straightforward to one skilled in the art.

The method steps of the invention may be embodiment in sets of executable machine code stored in a variety of formats such as object code or source code, integrated with the code of other programs, implemented as subroutines, by external program calls or by other techniques as known in the art.

Even the hardware embodiments of the invention could be encoded in a software form such as the hardware development languages (HDL code) used to fabricate integrated circuits. This HDL or similar code could be stored on any electronic memory means such computer diskettes, CD-Roms, Random Access Memory (RAM) and Read Only Memory (ROM). As well, electronic signals representing this software code may also be transmitted via a communication network.

**Options and Alternatives**

While particular embodiments of the present invention have been shown and described, it is clear that changes and modifications may be made to such embodiments without departing from the true scope of the invention. For example: as defined by the appended claims

1. the circuit of the invention could be used with any manner of power source including: conventional AC power supplies (often referred to as "bricks"), computer data busses such as USB ports, external battery packs, laptop power supplies, DC outlets on aircraft;
2. any manner of electrical appliance could be charged with such a circuit including portable laptop computers, personal digital assistants (PDAs), cellular telephones, wireless email and paging devices; and
3. any manner of rechargeable battery could be used including single or multiple lithium-ion, nickel-cadmium, or other types of cells.

Again, such implementations would be clear to one skilled in the art from the teachings herein, and do not take away from the invention.

**INDUSTRIAL APPLICABILITY**

The present invention provides to a method and apparatus for charging a battery in a portable communication device from a variety of power sources.

**Claims**

1.  A battery caging circuit which adjusts to the parameters of an external power supply ($V_{BUS}$) comprising:

    a battery charge controller (30) connected to said external power supply ($V_{BUS}$) and electrifying a battery (32) and a regulating circuit (34) for controlling the current drawn by said battery charge controller (30) to maintain the current at a magnitude below a given value, the given value of current corresponding to a magnitude of current that produces a voltage ($V_{CHRG}$) at an input to said battery charge conroller (30) that corresponds to a low voltage shut off level for said battery charge controller (30).

2.  The battery charging circuit of claim 1 where said battery charge controller (30) to includes a current control input (PROG).

3.  The battery charging circuit of claim 2 where said regulating circuit comprises:

    a regulating circuit responsive to the voltage ($V_{CHRG}$) at the input to said battery charge controller (30) by adjusting the current drawn by said battery charge controller (30) to keep the voltage ($V_{CHRG}$) at the input to said battery charge controller (30) above a preset minimum limit corresponding to said low voltage shut off level.

4.  The battery charging circuit of claim 3 where said regulating circuit comprises:

    a comparator (50) for receiving a voltage signal ($V_N$) from the input ($V_{CHRG}$) to said battery charge controller (52) and a reference voltate signal ($V_P$) and responds to said voltage signal ($V_N$) being less than said reference voltage ($V_P$) by reducing the current supplied by said battery charge controller (52).

5.  The battery charging circuit of claim 3 where said regulating circuit comprises:

    an electronic potentiometer (R9) operable to incrementally decrease its resistance in response to control pulses from a microprocessor, thereby incrementally increasing the current supplied by said battery charge controller (52).

**6.** The battery charging circuit of claim 3 wherein said regulating circuit comprises:

an electronic potentiometer (R9) operable to cyclically ramp though its range of resistance, thereby cycling the current supplied by said battery charge controller (52) through a range of 0 A to a current level that causes said battery charge controller (52) low voltage shut off to trip.

**7.** The battery charging circuit of claim 4 wherein:

said reference voltage ($V_P$) is provided by said battery charge controller (52).

**8.** The battery charging circuit of claim 4 wherein:

said comparator (50) further comprises a voltage divider (R1, R2) for scaling down said voltage signal ($V_N$) from the input ($V_{CHRG}$) to said battery charge controller (52) and said reference voltage signal ($V_P$) is scaled down proportionally.

**9.** The battery charging circuit of claim 4 wherein:

said regulating circuit further comprises a capacitor (C1) coupling the output of said comparator (50) to ground, thereby smoothing out variances in the output of said comparator (50).

**10.** The battery charging circuit of claim 4 where said external power supply comprises a computer data bus having a power node.

**11.** The battery charging circuit of claim 10 wherein:

said computer data bus is a Universal Serial Bus (USB)

**12.** The battery charger of claim 4, wherein said comparator (50) has a hysteresis, whereby said battery charge controller (52) will not begin to deliver current again until said voltage level of said computer data bus is well above said reference voltage ($V_P$).

**13.** The battery charger of claim 4, wherein said comparator (50) is operable to lower the charge current when the voltage of the external power supply drops below a preset reference level.

**14.** The battery charger of claim 4, wherein said battery charge controller (52) includes a low voltage shut off circuit, said battery charge controller (52) shuts off if the voltage at the input of said battery charge controller (52) falls below said preset minimum limit, and wherein said regulating circuit lowers the current output of said battery charge controller (52) when the voltage of the supply drops below a preset reference, to avoid said preset minimum limit.

**15.** A method for charging a battery of a portable device via an external power supply, which adjusts to the parameters of said external power supply to minimize charge time, said method comprising the steps of:

connecting a battery charge controller to said external power supply and to a rechargeable battery in said portable device (90),
determining a low voltage shut off level for said battery charge controller (92),
monitoring the voltage that said external power supply provides to said battery charge controller (94), and
controlling the current drawn by said battery charge controller to maintain the current at a magnitude below a given value, the given value of current corresponding to a magnitude of current that produces a voltage at an input to said battery charge controller that corresponds to a low voltage shut off level for said battery charge controller (96).

**Patentansprüche**

**1.** Batterieladeschaltung, die sich an die Parameter einer externen Stromversorgung ($V_{BUS}$) anpasst, die aufweist:

eine Batterieladesteuervorrichtung (30), die mit der externen Stromversorgung ($V_{BUS}$) verbunden ist und eine Batterie (32) elektrisch lädt; und
eine Regulierungsschaltung (34) zum Steuern des Stroms, der von der Batterieladesteuervorrichtung (30) aufgenommen wird, um den Strom an Menge unter einem gegebenen Wert zu halten, wobei der gegebene Wert von Strom einer Menge von Strom entspricht, die eine Spannung ($V_{CHRG}$) an einem Eingang der Batterieladesteuervorrichtung (30) erzeugt, die einem Niederspannungs-Abschaltpegel für die Batterieladesteuervorrichtung (30) entspricht.

2. Batterieladeschaltung gemäß Anspruch 1, wobei die Batterieladesteuervorrichtung (30) einen Stromsteuerungseingang (PROG) umfasst.

3. Batterieladeschaltung gemäß Anspruch 2, wobei die Regulierungsschaltung aufweist:

eine Regulierungsschaltung, die reagiert auf die Spannung ($V_{CHRG}$) an dem Eingang in die Batterieladesteuervorrichtung (30) durch Anpassen des Stroms, der durch die Batterieladesteuervorrichtung (30) aufgenommen wird, um die Spannung ($V_{CHRG}$) an dem Eingang in die Batterieladesteuervorrichtung (30) über einer voreingestellten Minimumgrenze zu halten, die dem Niederspannungs-Abschaltpegel entspricht.

4. Batterieladeschaltung gemäß Anspruch 3, wobei die Regulierungsschaltung aufweist:

einen Komparator (50) zum Empfangen eines Spannungssignals ($V_N$) von dem Eingang ($V_{CHRG}$) in die Batterieladesteuervorrichtung (52) und eines Referenzspannungssignals ($V_P$), und reagiert, wenn das Spannungssignal ($V_N$) geringer ist als die Referenzspannung ($V_P$), durch Reduzieren des Stroms, der von der Batterieladesteuervorrichtung (52) geliefert wird.

5. Batterieladeschaltung gemäß Anspruch 3, wobei die Regulierungsschaltung aufweist:

ein elektronisches Potentiometer (R9), das betriebsfähig ist, seinen Widerstand schrittweise zu reduzieren in Reaktion auf Steuerungspulse von einem Mikroprozessor, wodurch der Strom, der von der Batterieladesteuervorrichtung (52) geliefert wird, schrittweise erhöht wird.

6. Batterieladeschaltung gemäß Anspruch 3, wobei die Regulierungsschaltung aufweist:

ein elektronisches Potentiometer (R9), das betriebsfähig ist, zyklisch durch seinen Widerstandsbereich zu gehen, wodurch der Strom, der von der Batterieladesteuervorrichtung (52) geliefert wird, zyklisch durch einen Bereich von OA bis zu einem aktuellen Pegel durchläuft, der veranlasst, dass der Niederspannungs-Abschaltpegel der Batterieladesteuervorrichtung (52) ausgelöst wird.

7. Batterieladeschaltung gemäß Anspruch 4, wobei:

die Referenzspannung ($V_P$) von der Batterieladesteuervorrichtung (52) geliefert wird.

8. Batterieladeschaltung gemäß Anspruch 4, wobei:

der Komparator (50) weiter aufweist einen Spannungsteiler (R1, R2) zum Reduzieren des Spanungssignals ($V_N$) von dem Eingang ($V_{CHRG}$) in die Batterieladesteuervorrichtung (52), und wobei das Referenzspannungssignal ($V_P$) proportional reduziert wird.

9. Batterieladeschaltung gemäß Anspruch 4, wobei:

die Regulierungsschaltung weiter einen Kondensator (C1) aufweist, der den Ausgang des Komparators (50) mit Masse koppelt, wodurch Varianzen in dem Ausgang des Komparators (50) geglättet werden.

10. Batterieladeschaltung gemäß Anspruch 4, wobei die externe Stromversorgung einen Computerdatenbus mit einem Leistungsknoten aufweist.

11. Batterieladeschaltung gemäß Anspruch 10, wobei:

der Computerdatenbus ein USB (Universal Serial Bus) ist.

**12.** Batterieladeschaltung gemäß Anspruch 4, wobei der Komparator (50) eine Hysterese hat, wobei die Batterieladesteuervorrichtung (52) nicht wieder beginnt, Strom zu liefern, bis der Spannungspegel des Computerdatenbus weit über der Referenzspannung ($V_P$) liegt.

**13.** Batterieladeschaltung gemäß Anspruch 4, wobei der Komparator (50) betriebsfähig ist, den Ladestrom zu reduzieren, wenn die Spannung der externen Stromversorgung unter einen voreingestellten Referenzpegel fällt.

**14.** Batterieladeschaltung gemäß Anspruch 4, wobei die Batterieladesteuervorrichtung (52) eine Abschaltschaltung bei niedriger Spannung umfasst, wobei die Batterieladesteuervorrichtung (52) abschaltet, wenn die Spannung an dem Eingang der Batterieladesteuervorrichtung (52) unter die voreingestellte Minimumgrenze fällt, und wobei die Regulierungsschaltung die Stromausgabe der Batterieladesteuervorrichtung (52) reduziert, wenn die Spannung der Versorgung unter eine voreingestellte Referenz fällt, um die voreingestellte Minimumgrenze zu vermeiden.

**15.** Verfahren zum Laden einer Batterie einer tragbaren Vorrichtung über eine externe Stromversorgung, das sich an die Parameter einer externen Stromversorgung anpasst, um eine Ladezeit zu minimieren, wobei das Verfahren die Schritte aufweist:

Verbinden einer Batterieladesteuervorrichtung mit der externen Stromversorgung und einer wiederaufladbaren Batterie in der tragbaren Vorrichtung (90);
Bestimmen eines Abschaltpegels bei niedriger Spannung für die Batterieladesteuervorrichtung (92);
Überwachen der Spannung, die die externe Stromversorgung an die Batterieladesteuervorrichtung liefert (94); und
Steuern des Stroms, der von der Batterieladesteuervorrichtung aufgenommen wird, um den Strom an einer Menge unter einem gegebenen Wert zu halten, wobei der gegebene Wert von Strom einer Menge von Strom entspricht, die eine Spannung an einem Eingang der Batterieladesteuervorrichtung erzeugt, die einem Niederspannungs-Abschaltpegel für die Batterieladesteuervorrichtung entspricht (96).

## Revendications

**1.** Circuit de charge de batterie qui s'ajuste aux paramètres d'une alimentation extérieure ($V_{BUS}$), comprenant :

un dispositif de commande de charge de batterie (30) connecté à ladite alimentation extérieure ($V_{BUS}$) et alimentant en électricité une batterie (32), et
un circuit de régulation (34) pour commander le courant consommé par ledit dispositif de commande de charge de batterie (30) de façon à maintenir le courant à une amplitude inférieure à une valeur donnée, la valeur de courant donnée correspondant à une amplitude de courant qui produit une tension ($V_{CHRG}$) sur une entrée dudit dispositif de commande de charge de batterie (30) qui correspond à un niveau de coupure de basse tension pour ledit dispositif de commande de charge de batterie (30).

**2.** Circuit de charge de batterie selon la revendication 1, dans lequel ledit dispositif de commande de charge de batterie (30) comprend une entrée de commande de courant (PROG).

**3.** Circuit de charge de batterie selon la revendication 2, dans lequel ledit circuit de régulation comprend :

un circuit de régulation réagissant à la tension ($V_{CHRG}$) à l'entrée vers ledit dispositif de commande de charge de batterie (30) en ajustant le courant consommé par ledit dispositif de commande de charge de batterie (30) de façon à maintenir la tension ($V_{CHRG}$) à l'entrée vers ledit dispositif de commande de charge de batterie (30) au-dessus d'une limite minimale prédéfinie correspondant audit niveau de coupure de basse tension.

**4.** Circuit de charge de batterie selon la revendication 3, dans lequel ledit circuit de régulation comprend :

un comparateur (50) pour recevoir un signal de tension ($V_N$) à partir de l'entrée ($V_{CHRG}$) vers ledit dispositif de commande de charge de batterie (52) et un signal de tension de référence ($V_P$) et réagir au fait que ledit signal de tension ($V_N$) est inférieur à ladite tension de référence ($V_P$) en réduisant le courant délivré par ledit dispositif de commande de charge de batterie (52).

**5.** Circuit de charge de batterie selon la revendication 3, dans lequel ledit circuit de régulation comprend :

un potentiomètre électronique (R9) pouvant fonctionner de façon à diminuer sa résistance par incréments en réponse à des impulsions de commande venant d'un microprocesseur, de façon à augmenter ainsi par incréments le courant délivré par ledit dispositif de commande de charge de batterie (52).

**6.** Circuit de charge de batterie selon la revendication 3, dans lequel ledit circuit de régulation comprend :

un potentiomètre électronique (R9) pouvant fonctionner de façon à effectuer une rampe cyclique sur sa plage de résistance, de façon à faire ainsi effectuer un cycle au courant délivré par ledit dispositif de commande de charge de batterie (52) dans une plage de 0 A à un niveau de courant qui provoque le déclenchement de l'arrêt de basse tension dudit dispositif de commande de charge de batterie (52).

**7.** Circuit de charge de batterie selon la revendication 4, dans lequel :

ladite tension de référence ($V_P$) est délivrée par ledit dispositif de commande de charge de batterie (52).

**8.** Circuit de charge de batterie selon la revendication 4, dans lequel :

ledit comparateur (50) comprend de plus un diviseur de tension (R1, R2) pour diminuer ledit signal de tension ($V_N$) à partir de l'entrée ($V_{CHRG}$) vers ledit dispositif de commande de charge de batterie (52), et ledit signal de tension de référence ($V_P$) est diminué en proportion.

**9.** Circuit de charge de batterie selon la revendication 4, dans lequel :

ledit circuit de régulation comprend de plus un condensateur (C1) couplant la sortie dudit comparateur (50) à la masse, de façon à lisser ainsi des variations dans la sortie dudit comparateur (50).

**10.** Circuit de charge de batterie selon la revendication 4, dans lequel ladite alimentation extérieure comprend un bus de données d'ordinateur comportant un noeud de puissance.

**11.** Circuit de charge de batterie selon la revendication 10, dans lequel :

ledit bus de données d'ordinateur est un bus série universel (USB).

**12.** Chargeur de batterie selon la revendication 4, dans lequel ledit comparateur (50) présente une hystérésis, grâce à quoi ledit dispositif de commande de charge de batterie (52) ne recommence pas à délivrer de courant tant que ledit niveau de tension dudit bus de données d'ordinateur n'est pas bien supérieur à ladite tension de référence ($V_P$) .

**13.** Chargeur de batterie selon la revendication 4, dans lequel ledit comparateur (50) peut fonctionner de façon à diminuer le courant de charge lorsque la tension de l'alimentation extérieure chute en dessous d'un niveau de référence prédéfini.

**14.** Chargeur de batterie selon la revendication 4, dans lequel ledit dispositif de commande de charge de batterie (52) comprend un circuit de coupure de basse tension, ledit dispositif de commande de charge de batterie (52) s'interrompant si la tension à l'entrée dudit dispositif de commande de charge de batterie (52) chute en dessous de ladite limite maximale prédéfinie, et dans lequel ledit circuit de régulation diminue la sortie de courant dudit dispositif de commande de charge de batterie (52) lorsque la tension de l'alimentation chute en dessous d'une référence prédéfinie, de façon à éviter ladite limite minimale prédéfinie.

**15.** Procédé pour charger une batterie d'un dispositif portable par l'intermédiaire d'une alimentation extérieure, qui s'ajuste aux paramètres de ladite alimentation extérieure de façon à minimiser le temps de charge, ledit procédé comprenant les étapes consistant à :

connecter un dispositif de commande de charge de batterie à ladite alimentation extérieure et à une batterie rechargeable dans ledit dispositif portable (90),
déterminer un niveau de coupure de basse tension pour ledit dispositif de commande de charge de batterie (92),
contrôler la tension que ladite alimentation extérieure délivre audit dispositif de commande de charge de batterie (94), et

commander le courant consommé par ledit dispositif de commande de charge de batterie afin de maintenir le courant à une amplitude inférieure à une valeur donnée, la valeur de courant donnée correspondant à une amplitude de courant qui produit une tension à une entrée dudit dispositif de commande de charge de batterie qui correspond à un niveau de coupure de basse tension pour ledit dispositif de commande de charge de batterie (96).

Fig. 1

Fig. 2

**Fig. 3**

**Fig. 4**

Fig. 5

Fig. 6

START

90 — CONNECTING BATTERY CHARGE
CONTROLLER TO EXTERNAL POWER
SUPPLY AND TO RECHARGEABLE BATTERY

92 — DETERMINING LOW VOLTAGE SHUTOFF LEVEL
FOR BATTERY CHARGE CONTROLLER

94 — MONITORING VOLTAGE PROVIDED TO
BATTERY CHARGE CONTROLLER

96 — MAXIMIZING CURRENT PROVIDED BY BATTERY
CHARGE CONTROLLER, WHILE KEEPING
VOLTAGE TO BATTERY CHARGE CONROLLER
ABOVE LOW VOLTAGE SHUTOFF LEVEL

DONE

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5723970 A
- US 6507173 B